# EUROPÄISCHE PATENTSCHRIFT

(11) **EP 3 155 387 B1**
(45) Veröffentlichungstag und Bekanntmachung des Hinweises auf die Patenterteilung: **10.04.2019**
(21) Anmeldenummer: 15726202.3
(22) Anmeldetag: 08.06.2015
(51) Int. Cl.: G01K 1/08, G01K 13/02

(54) **TEMPERATURSENSOR, INSBESONDERE HOCHTEMPERATURSENSOR, ABGASTEMPERATURÜBERWACHUNGSSYSTEM UND VERFAHREN ZUR HERSTELLUNG DES TEMPERATURSENSORS**
TEMPERATURE SENSOR, IN PARTICULAR HIGH TEMPERATURE SENSOR, WASTE GAS TEMPERATURE MONITORING SYSTEM AND METHOD FOR PRODUCING THE TEMPERATURE SENSOR
CAPTEUR DE TEMPÉRATURE, EN PARTICULIER CAPTEUR DE TEMPÉRATURE ÉLEVÉE, SYSTÈME DE SURVEILLANCE DE TEMPÉRATURE DE GAZ D'ÉCHAPPEMENT ET PROCÉDÉ DE FABRICATION DU CAPTEUR DE TEMPÉRATURE

(30) Priorität: 10.06.2014 DE 102014108097
(43) Veröffentlichungstag der Anmeldung: 19.04.2017
(73) Patentinhaber: Heraeus Sensor Technology GmbH, 63450 Hanau (DE)
(72) Erfinder: MUZIOL, Matthias, 63533 Mainhausen (DE); DIETMANN, Stefan, 63755 Alzenau (DE); WIENAND, Karlheinz, 63741 Aschaffenburg (DE)
(74) Vertreter: Kilchert, Jochen
(86) Internationale Anmeldenummer: PCT/EP2015/062637
(87) Internationale Veröffentlichungsnummer: WO 2015/189109

(56) Entgegenhaltungen:
- EP-A1- 1 881 309
- EP-A2- 2 068 137
- FR-A1- 2 959 562

## Beschreibung

Die Erfindung betrifft einen Temperatursensor, insbesondere Hochtemperatursensor, ein Abgastemperaturüberwachungssystem und ein Verfahren zur Herstellung des Temperatursensors. Ein Temperatursensor der eingangs genannten Art ist beispielsweise aus EP 1 881 309 A1 bekannt. Andere Beispiele sind in FR 2 959 562 A1 und EP 2 068 137 A2 zu finden.

Der bekannte Temperatursensor aus EP 1 881 309 A1 weist ein Messelement auf, dessen Kontaktdrähte jeweils über eine Dehnungsausgleichseinrichtung bzw. ein Ausgleichselement verfügen und mit einem Zuleitungsdraht verbunden sind. Insbesondere sind die Kontaktdrähte jeweils selbst zu einer einzigen Schleife geformt. Durch die Schleife sollen thermische und mechanische Belastungen, die auf die Kontaktdrähte und die Zuleitungsdrähte wirken, ausgeglichen werden.

Allerdings erfordert die Bildung der Schleife an den Kontaktelementen einen Umformprozess bei der Herstellung, der vergleichsweise aufwändig ist. Außerdem reicht in vielen Anwendungen eine einzige Schleife nicht aus, um einerseits die durch die Temperaturschwankungen ausgelösten Dehnungen und andererseits den durch Vibrationen ausgelösten Belastungen standzuhalten.

Problematisch gestaltet sich auch die Verbindung zwischen dem zur Schleife umgeformten Kontaktdraht und dem Zuleitungsdraht. Üblicherweise erfolgt dies durch Anordnen des Kontaktdraht und des Zuleitungsdraht auf Stoß, d.h. durch Aneinanderlegen der längsaxialen Endflächen, und anschließendem Setzen eines Schweißpunkts. Bereits die Ausrichtung der beiden Schweißpartner zueinander erfordert eine hohe Präzision, die bei der Serienproduktion hinderlich ist. Der Schweißpunkt ist außerdem bruchanfällig und trägt daher das Risiko, dass trotz des Ausgleichselements die elektrische Verbindung in Folge der hohen mechanischen und thermischen Belastungen unterbrochen wird.

Die Aufgabe der Erfindung besteht darin, einen Temperatursensor anzugeben, der hohen mechanischen und thermischen Belastungen standhält und leicht zu fertigen ist. Ferner besteht die Aufgabe der Erfindung darin, ein Abgastemperaturüberwachungssystem mit einem solchen Temperatursensor sowie ein Herstellungsverfahren anzugeben.

Erfindungsgemäß wird diese Aufgabe im Hinblick auf den Temperatursensor durch den Gegenstand des Patentanspruchs 1, im Hinblick auf das Abgastemperaturüberwachungssystem durch den Gegenstand des Patentanspruchs 13 und im Hinblick auf das Herstellungsverfahren durch den Gegenstand des Patentanspruchs 14 gelöst.

So beruht die Erfindung auf dem Gedanken, einen Temperatursensor, insbesondere Hochtemperatursensor, mit einem Messelement anzugeben, das Kontaktdrähte aufweist. Dabei ist wenigstens ein Kontaktdraht über ein Ausgleichselement mit einem Zuleitungsdraht verbunden. Erfindungsgemäß ist das Ausgleichselement durch eine mäanderförmige Flachfeder gebildet, die an wenigstens einem Längsende ein gabelartiges oder rinnenförmiges Positionierelement zum formschlüssigen Vorpositionieren der Flachfeder an dem Kontaktdraht und/oder dem Zuleitungsdraht aufweist.

Die Verwendung einer Flachfeder als Ausgleichselement hat mehrere Vorteile. Beispielsweise nimmt die Flachfeder einen deutlich geringeren Bauraum ein, weshalb der erfindungsgemäße Temperatursensor insgesamt kompakt ist. Die Verwendung einer mäanderförmigen bzw. mäandrierenden Flachfeder reduziert nicht nur den für den Temperatursensor notwendigen Bauraum, sondern stellt gleichzeitig einen großen Federweg bereitgestellt. Mit anderen Worten besteht durch die mäandrierende Flachfeder ein gutes Verhältnis von Federweg zu Bauraumbedarf.

Auch ermöglicht es die Flachfeder, die insbesondere einen rechteckigen Querschnitt aufweisen kann, die Verbindung zu den Kontaktdrähten anders zu gestalten, als durch einen Schweißpunkt zwischen zwei auf Stoß angeordneten Schweißpartnern. Die Flachfeder kann über eine gewisse Länge mit den Kontaktdrähten überlappend seitlich angelegt und mit dem Kontaktdraht verbunden werden. Gegenüber einer Verbindung des Kontaktdrahts mit dem Ausgleichselement durch Aneinanderlegen der längsaxialen Endflächen, sorgt diese überlappende Anordnung für eine höhere Stabilität. Schließlich erleichtert die Flachfeder die Herstellung des Temperatursensors, da sich die Flachfeder leicht mit dem Kontaktdraht des Messelements ausrichten lässt. So kann die Flachfeder auf eine Unterlage gelegt werden, so dass lediglich das Messelement im Wesentlichen in einer zweidimensionalen Ebene korrekt an das Ausgleichselement zu positionieren ist, bevor die Verbindung zwischen den beiden Elementen erfolgt.

In einer bevorzugten Ausführungsform des erfindungsgemäßen Temperatursensors ist die Flachfeder in einer Ebene mit dem Kontaktdraht und/oder dem Zuleitungsdraht angeordnet. Mit anderen Worten können der Kontaktdraht und der Zuleitungsdraht eine Ebene aufspannen, in welcher die Flachfeder angeordnet ist. Die einzelnen, die Mäanderform bildenden Schlaufen der Flachfeder sind vorzugsweise in dieser Ebene angeordnet.

Die Flachfeder weist an wenigstens einem Längsende ein gabelartiges oder rinnenförmiges Positionierelement zum formschlüssigen Vorpositionieren der Flachfeder an dem Kontaktdraht und/oder dem Zuleitungsdraht auf. Das gabelartige oder rinnenförmige Positionierelement erleichtert weiter die Herstellung des erfindungsgemäßen Temperatursensors. Das Positionierelement ermöglicht es, vor der Verbindung zwischen dem Kontaktdraht bzw. Zuleitungsdraht und der Flachfeder eine Vorpositionierung vorzunehmen, so dass ein sicherer Kontakt zwischen Kontaktdraht bzw. Zuleitungsdraht und Flachfeder besteht. Bevorzugt ist insbesondere vorgesehen, dass die Flachfeder an beiden Längsenden jeweils ein Positionierelement aufweist, wobei ein distales Positionierelement mit dem Kontaktdraht und ein proximales Positionierelement mit dem Zuleitungsdraht verbunden ist. So kann die Verbindung des Ausgleichselements bzw. der Flachfeder mit dem Kontaktdraht und dem Zuleitungsdraht nach demselben Prinzip hergestellt werden, was weiterhin die Serienfertigung eines solchen Temperatursensors erleichtert.

Vorzugsweise umgreift das distale Positionierelement ein freies Ende des Kontaktdrahts und/oder das proximale Positionierelement umgreift ein freies Ende des Zuleitungsdrahts. Dabei kann vorgesehen sein, dass ein gabelartiges Positionierelement zur Anwendung gelangt, wenn der Kontaktdraht und/oder der Zuleitungsdraht einen rechteckigen Querschnitt aufweisen. Dann kann der Kontaktdraht bzw. der Zuleitungsdraht einfach zwischen Zinken des gabelartigen Positionierelements eingelegt werden, so dass ein Flächenkontakt zwischen dem Kontaktdraht bzw. Zuleitungsdraht und dem Positionierelement der Flachfeder besteht. Dies bereitet eine gute und feste Verbindung zwischen dem Kontaktdraht bzw. Zuleitungsdraht und der Flachfeder vor. Im Falle eines Kontaktdrahts bzw. Zuleitungsdrahts mit einem runden Querschnitt kann vorgesehen sein, dass die Flachfeder ein rinnenförmiges Positionierelement aufweist, wobei in die Rinne der entsprechende Kontaktdraht bzw. Zuleitungsdraht zum Zwecke der Vorpositionierung eingelegt wird. In diesem Zusammenhang wird auch darauf hingewiesen, dass die Flachfeder bzw. allgemein das Ausgleichselement, im Rahmen der vorliegenden Erfindung sowohl beidseitig ein gabelartiges oder ein rinnenförmiges Positionierelement aufweisen kann. Es ist jedoch auch möglich, dass die Flachfeder an einem Längsende ein gabelartiges und am gegenüberliegenden Längsende ein rinnenförmiges Positionierelement aufweist.

In einer weiteren bevorzugten Ausgestaltung der Erfindung weist die Flachfeder mehrere im Wesentlichen parallel angeordnete Stege mit unterschiedlicher Länge auf, wobei die Stege durch Schleifen miteinander verbunden sind. Dabei erhöht sich die Länge der Stege vom distalen Positionierelement in Richtung zum proximalen Positionierelement. Eine solche Konfiguration wird dem zur Verfügung stehenden Bauraum gut gerecht. In einigen Fällen kann der Temperatursensor eine sich zumindest abschnittsweise verjüngende Gehäusespitze aufweisen, wobei mit der zuvor beschriebenen Längenänderung der Stege sichergestellt ist, dass sich die Flachfeder gut an eine solche Außenkontur des Temperatursensors anpasst.

Das distale Positionierelement kann mit dem Kontaktdraht und/oder das proximale Positionierelement kann mit dem Zuleitungsdraht jeweils durch wenigstens eine Längsschweißnaht verbunden sein. Mit anderen Worten ist vorgesehen, die Positionierelemente mit ihrem jeweils zugeordneten Kontaktdraht bzw. Zuleitungsdraht durch eine Längsschweißnaht zu verbinden. Die Verbindung erfolgt gerade nicht mit einem Schweißtropfen oder einer Punktschweißung, wobei zwei auf Stoß sich berührende Elemente miteinander gekoppelt werden. Vielmehr wird die Schweißverbindung entlang der Drähte bzw. der Flachfeder gesetzt, so dass sich insgesamt längere und stabilere Schweißnähte ergeben. Beispielsweise kann das gabelartige Positionierelement den Kontaktdraht bzw. Zuleitungsdraht teilweise umgreifen und über die gesamte Länge der sich überlappenden Abschnitte mit dem Kontaktdraht bzw. Zuleitungsdraht verschweißt sein. Dies ergibt eine Längsschweißnaht. Analoges gilt für die rinnenförmige Ausführung des Positionierelements.

Insbesondere ist daher vorgesehen, dass die Längsschweißnaht parallel zu dem Kontaktdraht und/oder dem Zuleitungsdraht verläuft. Konkret kann die Längsschweißnaht jeweils parallel zu den Längsachsen des Kontaktdrahts bzw. Zuleitungsdrahts verlaufen.

Um eine gute elektrische und mechanische Verbindung zwischen dem Kontaktdraht, der Flachfeder und dem Zuleitungsdraht sicherzustellen, ist es zweckmäßig, wenn die Flachfeder sowie der Kontaktdraht und/oder der Zuleitungsdraht das gleiche Material aufweisen. Die Flachfeder kann insbesondere aus einem flachen Blech geschnitten sein. Dies erleichtert die Herstellung und führt zu einer homogenen Werkstoffstruktur, wodurch die Bruchfestigkeit der Flachfeder erhöht ist.

Das Messelement, das die Kontaktdrähte aufweist, kann ferner einen Schichtwiderstand mit einem keramischen Träger und einem Widerstandselement aufweisen, wobei das Widerstandselement durch eine Dünnschicht aus Platin oder einer Platin-Legierung gebildet ist. Derartige Messelemente sind besonders präzise und erlauben zuverlässige Messungen auch bei schnellen Aufheiz- und Abkühl-Phasen.

Zum Schutz des Messelements, der Flachfeder und des Zuleitungsdrahts vor äußeren Einflüssen, insbesondere vor chemischen Einflüssen, die durch die Anwendung zur Abgastemperaturmessung hervorgerufen werden, können das Messelement, die Flachfeder und der Zuleitungsdraht in einem Sensorgehäuse eingeschlossen sein. Dabei kann das Messelement in ein keramisches Füllmaterial eingebettet sein, das eine Gehäusespitze des Sensorgehäuses ausfüllt. Die Flachfeder kann sich durch einen Freiraum des Sensorgehäuses erstrecken. Das keramische Füllmaterial schützt das Messelement vor Vibrationen und dient außerdem als Wärmeübertrager, um Wärmeenergie von der Außenseite des Sensorgehäuses an das Messelement zu leiten. Die Anordnung der Flachfeder in einem Freiraum des Sensorgehäuses hat den Vorteil, dass die Flachfeder frei schwingen kann. Vibrationen oder Längenausdehnungen aufgrund von Temperaturschwankungen können so gut ausgeglichen werden.

Der zuvor beschriebene Temperatursensor ist vorzugsweise für die Messung von Abgastemperaturen eines Verbrennungsmotors geeignet, bei welchem die maximalen Abgastemperaturen mindestens 900°C, insbesondere mindestens 1.000°C, insbesondere mindestens 1.050°C betragen. Der Messbereich des Temperatursensors reicht vorzugsweise bis 1.100°C. Insgesamt kann sich der Temperatursensor für die Messung von Abgastemperaturen eines Benzinmotors eignen.

Insofern kann der zuvor beschriebene Temperatursensor Teil eines Abgastemperaturüberwachungssystems sein, auf welchen ein nebengeordneter Aspekt der Erfindung gerichtet ist. Konkret betrifft der nebengeordnete Aspekt ein Abgastemperaturüberwachungssystem mit einem zuvor beschriebenen Temperatursensor.

Außerdem befasst sich die Erfindung mit einem Verfahren zur Herstellung eines zuvor beschriebenen Temperatursensors oder des zuvor erläuterten Abgastemperaturüberwachungssystems, wobei das Verfahren die folgenden Schritte aufweist:
- Vorpositionieren des Kontaktdrahts und/oder des Zuleitungsdrahts durch Anordnen der Flachfeder in einer Ebene mit dem Kontaktdraht und/oder dem Zuleitungsdraht, wobei sich der Kontaktdraht und/oder Zuleitungsdraht in das gabelartige oder rinnenförmige Positionierelement erstreckt;
- Verschweißen des Positionierelements mit dem Kontaktdraht und/oder dem Zuleitungsdraht durch eine Längsschweißnaht.

Das erfindungsgemäße Verfahren ist besonders einfach durchzuführen und eignet sich gut für die Serienproduktion. Gerade die Verwendung eines flachen Ausgleichselements in Form der Flachfeder erleichtert einige Handgriffe bei der Produktion, was sich auch auf die Herstellungskosten positiv auswirkt.

Die Erfindung wird im Folgenden anhand eines bevorzugten Ausführungsbeispiels mit Bezugnahme auf die beigefügten, schematischen Zeichnungen näher erläutert. Darin zeigen
- Fig. 1: einen Längsschnitt durch einen erfindungsgemäßen Temperatursensor nach einem bevorzugten Ausführungsbeispiel; und
- Fig. 2: einen Längsschnitt durch den Temperatursensor gemäß Fig. 1 entlang der Linie A-A.

Der in den beigefügten Zeichnungen dargestellte Temperatursensor ist vorzugsweise als Hochtemperatursensor ausgebildet. Mit anderen Worten hält der Temperatursensor Abgastemperaturen stand, die insbesondere bei Benzinmotoren typisch sind. Derartige Abgastemperaturen können mehr als 900°C, insbesondere mehr als 1.000°C, insbesondere mehr als 1.050°C, erreichen. Der Temperatursensor ist so gestaltet bzw. ausgelegt, dass derartige Temperaturen zuverlässig messbar sind. Üblicherweise reicht der Messbereich des Temperatursensors bis wenigstens zu den vorgenannten Werten, insbesondere aber bis zu einer Maximaltemperatur von 1.100°C.

Im Allgemeinen weist der Temperatursensor ein Messelement 10 auf, das beispielsweise als Schichtwiderstand ausgebildet sein kann. Insbesondere kann ein Schichtwiderstand aus einem keramischen Trägermaterial und einer Platin-Dünnschicht zum Einsatz gelangen, die auf das keramische Trägermaterial aufgebracht ist. Die Platin-Dünnschicht ist elektrisch mit Kontaktdrähten 11 verbunden, die am Messelement 10 ausgebildet sind. Die Kontaktdrähte 11 ermöglichen die Anbindung des Messelements 10 an eine Auswerteelektronik. Konkret erfolgt die Anbindung an die Auswerteelektronik über ein Ausgleichselement 12 und einen Zuleitungsdraht 13. Das Ausgleichselement 12 verbindet das Messelement 10, insbesondere dessen Kontaktdrähte 11, mit dem Zuleitungsdraht 13. Der Zuleitungsdraht 13 kann Teil eines mit einer Isolation versehenen Anschlusskabels 18 sein, das zu dem Temperatursensor führt.

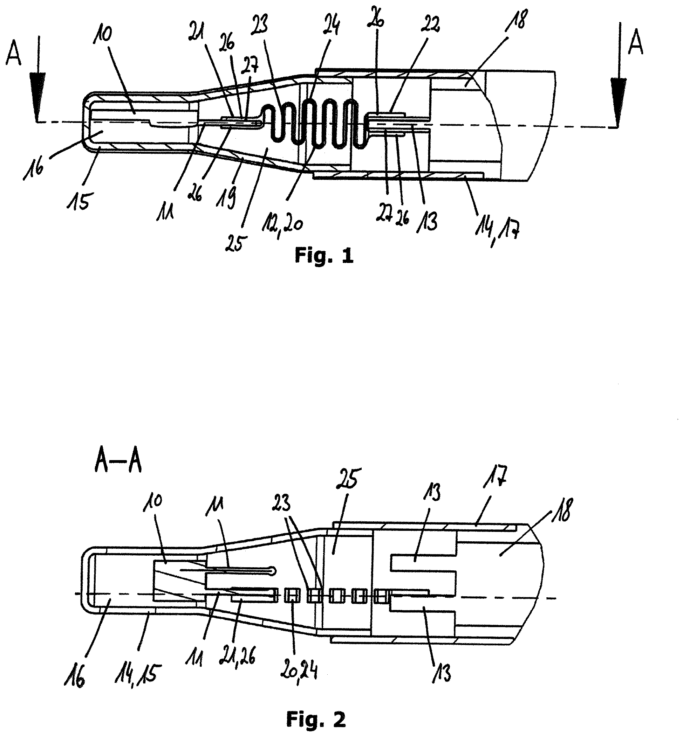

Insbesondere führt das Anschlusskabel 18 in ein Sensorgehäuse 14 des Temperatursensors. Das Sensorgehäuse 14 umschließt das Messelement 10, das Ausgleichselement 12 und den Zuleitungsdraht 13. Wie aus Fig. 1 gut erkennbar ist, ist das Sensorgehäuse 14 zweiteilig aufgebaut. Es umfasst eine Gehäusespitze 15 und ein rohrförmiges Außengehäuse 17. Das Außengehäuse 17 ist mit der Gehäusespitze 15 fest verbunden, wobei das Außengehäuse 17 ein proximales Ende der Gehäusespitze 15 überlappt. Die Gehäusespitze 15 weist einen konusförmigen Abschnitt 19 auf, der einen distalen, zylinderförmigen Abschnitt mit einem proximalen, zylinderförmigen Endabschnitt der Gehäusespitze 15 verbindet. Mit anderen Worten verjüngt sich das Sensorgehäuse 14 in distale Richtung.

Im distalen zylinderförmigen Abschnitt der Gehäusespitze 15 bzw. allgemein des Sensorgehäuses 14 ist das Messelement 10 angeordnet. Das Messelement 10 ist in der Gehäusespitze 15 in einem Füllmaterial 16 eingebettet. Das Füllmaterial 16 ist vorzugsweise durch eine Füllkeramik gebildet und fixiert das Messelement 10 in der Gehäusespitze 15. Der konusförmige Abschnitt 19 weist kein Füllmaterial 16 auf. In den konusförmigen Abschnitt 19 ragen die Kontaktdrähte 11. Die Kontaktdrähte 11, das Ausgleichselement 12 und der Zuleitungsdraht 13 sind daher in einem Freiraum 25 angeordnet, der durch das Sensorgehäuse 14 begrenzt ist.

Das Ausgleichselement 12 ist bei dem Temperatursensor gemäß Fig. 1 und 2 als Flachfeder 20 ausgebildet. Die Flachfeder 20 ist mäanderförmig gewunden bzw. weist mäanderförmige Federabschnitte auf. Dabei erstrecken sich die mäanderförmigen Federabschnitte in einer gemeinsamen Ebene. Die einzelnen mäanderförmigen Federabschnitte sind durch Stege 23 gebildet, wobei jeweils zwei Stege 23 durch eine Schleife 24 miteinander verbunden sind. Wie in Fig. 1 gut erkennbar ist, erhöht sich die Länge der Stege 23 von distal nach proximal. Die Flachfeder 20 folgt somit dem Verlauf des konusförmigen Abschnitts 19.

An den längsaxialen Enden der Flachfeder 20 ist jeweils ein Positionierelement 21, 22 angeordnet. Insbesondere weist die Flachfeder 20 ein distales Positionierelement 21 und ein proximales Positionierelement 22 auf. Das distale Positionierelement 21 und das proximale Positionierelement 22 sind jeweils gabelartig ausgebildet. Mit anderen Worten gehen von den Längsenden der Flachfeder 20 jeweils zwei Schenkel 26 aus, zwischen welchen sich eine U-förmige Ausnehmung 27 erstreckt. In der Ausnehmung 27 des distalen Positionierelements 21 ist ein Kontaktdraht 11 des Messelements 10 angeordnet. Mit anderen Worten umgreift das distale Positionierelement 21 den Kontaktdraht 11. Das proximale Positionierelement 22 umgreift den Zuleitungsdraht 13. Der Zuleitungsdraht 13 ist also in die U-förmige Ausnehmung 27 des proximalen Positionierelements 22 eingelegt. In Fig. 1 ist außerdem gut erkennbar, dass der Abstand der Schenkel 26 der Positionierelemente 21, 22 bzw. die Breite der jeweiligen Ausnehmung 27 unterschiedlich ist. Da der Kontaktdraht 11 dünner als der Zuleitungsdraht 13 ist, weist das distale Positionierelement 21 eine schmalere Ausnehmung 27 als das proximale Positionierelement 22 auf. Jedenfalls ist vorgesehen, dass der Abstand der Schenkel 26 so angepasst ist, dass der Kontaktdraht 11 bzw. der Zuleitungsdraht 13 mit Flächenkontakt zu den Schenkeln 26 in die Ausnehmung 27 eingelegt werden kann.

Durch die gabelartigen Positionierelemente 21, 22 bieten sich verbesserte Anbindungsmöglichkeiten für das Ausgleichselement 12 an den Kontaktdraht 11 bzw. den Zuleitungsdraht 13. Insbesondere ist vorgesehen, entlang der Schenkel 26 der Positionierelemente 21, 22 eine Längsschweißnaht anzulegen, um den Kontaktdraht 11 bzw. den Zuleitungsdraht 13 mit dem jeweils zugeordneten Positionierelement 21, 22 fest zu verbinden. Die Längsschweißnaht verbessert die Fixierung des Ausgleichselements 12 bzw. der Flachfeder 20 mit dem Kontaktdraht bzw. dem Zuleitungsdraht 13.

Fig. 2 zeigt in einer Querschnittsansicht entlang der Linie A-A der Fig. 1 gut den Aufbau der Flachfeder 20. Es ist erkennbar, dass die Flachfeder 20 im Wesentlichen ein rechteckiges Querschnittsprofil aufweist. Insbesondere ist die Flachfeder 20 in einer Ebene ausgerichtet. Bei der Herstellung des Temperatursensors ist daher vorgesehen, die Flachfeder aus einem Blech zu formen, beispielsweise durch Schneiden oder Stanzen. Dies erleichtert die Herstellung der Flachfeder 20. Gleichzeitig ermöglichen die Positionierelemente 21, 22 durch ihre gabelartige Form eine Vorpositionierung am Kontaktdraht 11 bzw. am Zuleitungsdraht 13, so dass der anschließende Schweißvorgang erleichtert ist. Insgesamt lässt sich der Temperatursensor daher einfach und effizient fertigen, insbesondere im Rahmen einer Serienproduktion.

Um die Anbindung zwischen Kontaktdraht 11 und distalen Positionierelement 21 zu verbessern, kann insbesondere vorgesehen sein, dass der Kontaktdraht 11 ebenfalls ein rechteckiges Querschnittsprofil aufweist. So entsteht ein verbesserter Flächenkontakt zwischen Kontaktdraht 11 und den Schenkeln 26 des distalen Positionierelements 21. Analoges gilt für den Zuleitungsdraht 13, der ebenfalls zumindest eine rechteckige Außenkontur aufweisen kann. Beispielsweise kann der Zuleitungsdraht 13 eine rechteckige Crimphülse aufweisen, die eine verbesserte Anbindung an das proximale Positionierelement 22 bietet.

Alternativ können die Positionierelemente 21, 22 eine rinnenförmige Struktur aufweisen. Insbesondere kann ein Querschnitt durch die Positionierelemente 21, 22 rinnenförmig sein. In die Rinne kann dann beispielsweise ein runder Kontaktdraht 11 bzw. ein runder Zuleitungsdraht 13 gut eingelegt und durch eine Längsschweißnaht mit dem Positionierelement 21, 22 verbunden werden. Mit anderen Worten ist vorgesehen, für runde Anschlussdrähte ein rinnenförmiges Positionierelement 21, 22 und für rechteckige Anschlussdrähte ein gabelartiges Positionierelement 21, 22 vorzusehen.

Die Positionierelemente 21, 22 sind vorzugsweise einstückig mit der Flachfeder 20 ausgebildet, insbesondere mit der Flachfeder 20 einstückig aus einem Blech gebildet. Dabei kann ein Blech mit einer Blechstärke von 0,5 mm eingesetzt werden. Vorzugsweise kommt als Material für die Flachfeder Alloy602 (Inconel602) zum Einsatz. Alternative Inconel-Legierungen sind beispielsweise Inconel600 oder Inconel601. Derartige Legierungen weisen einen hohen NickelAnteil auf und können zusätzlich Chrom und/oder Eisen umfassen.

### Bezugszeichenliste

- 10: Messelement
- 11: Kontaktdraht
- 12: Ausgleichselement
- 13: Zuleitungsdraht
- 14: Sensorgehäuse
- 15: Gehäusespitze
- 16: Füllmaterial
- 17: Außengehäuse
- 18: Anschlusskabel
- 19: Konusförmiger Abschnitt
- 20: Flachfeder
- 21: Distales Positionierelement
- 22: Proximales Positionierelement
- 23: Steg
- 24: Schleife
- 25: Freiraum
- 26: Schenkel
- 27: Ausnehmung

## Patentansprüche

1. Temperatursensor, insbesondere Hochtemperatursensor, mit einem Messelement (10), das Kontaktdrähte (11) aufweist, wobei wenigstens ein Kontaktdraht (11) über ein Ausgleichselement (12) mit einem Zuleitungsdraht (13) verbunden ist,wobei das Ausgleichselement (12) durch eine mäanderförmige Flachfeder (20) gebildet ist,
**dadurch gekennzeichnet, dass**
die Flachfeder (20) an wenigstens einem Längsende ein gabelartiges oder rinnenförmiges Positionierelement (21, 22) zum formschlüssigen Vorpositionieren der Flachfeder (20) an dem Kontaktdraht (11) und/oder dem Zuleitungsdraht (13) aufweist.

2. Temperatursensor nach Anspruch 1,
**dadurch gekennzeichnet, dass**
die Flachfeder (20) in einer Ebene mit dem Kontaktdraht (11) und/oder dem Zuleitungsdraht (13) angeordnet ist.

3. Temperatursensor nach Anspruch 1 oder 2,
**dadurch gekennzeichnet, dass**
die Flachfeder (20) an beiden Längsenden jeweils ein Positionierelement (21, 22) aufweist, wobei ein distales Positionierelement (21) mit dem Kontaktdraht (11) und ein proximales Positionierelement (22) mit dem Zuleitungsdraht (13) verbunden ist.

4. Temperatursensor nach Anspruch 3,
**dadurch gekennzeichnet, dass**
das distale Positionierelement (21) ein freies Ende des Kontaktdrahts (11) und/oder das proximale Positionierelement (22) ein freies Ende des Zuleitungsdrahts (13) umgreift.

5. Temperatursensor nach Anspruch 2 oder 3,
**dadurch gekennzeichnet, dass**
die Flachfeder (20) mehrere im Wesentlichen parallel angeordnete Stege (23) mit unterschiedlicher Länge aufweist, die durch Schleifen (24) miteinander verbunden sind, wobei sich die Länge der Stege (23) vom distalen Positionierelement (21) in Richtung zum proximalen Positionierelement (22) erhöht.

6. Temperatursensor nach einem der Ansprüche 3 bis 5,
**dadurch gekennzeichnet, dass**
das distale Positionierelement (21) mit dem Kontaktdraht (11) und/oder das proximale Positionierelement (22) mit dem Zuleitungsdraht (13) jeweils durch wenigstens eine Längsschweißnaht verbunden ist.

7. Temperatursensor nach Anspruch 6,
**dadurch gekennzeichnet, dass**
die Längsschweißnaht parallel zu dem Kontaktdraht (11) und/oder dem Zuleitungsdraht (13) verläuft.

8. Temperatursensor nach einem der vorhergehenden Ansprüche,
**dadurch gekennzeichnet, dass**
die Flachfeder (20) sowie der Kontaktdraht (11) und/oder der Zuleitungsdraht (13) das gleiche Material aufweisen.

9. Temperatursensor nach einem der vorhergehenden Ansprüche,
**dadurch gekennzeichnet, dass**
die Flachfeder (20) einstückig aus einem flachen Blech geschnitten ist.

10. Temperatursensor nach einem der vorhergehenden Ansprüche,
**dadurch gekennzeichnet, dass**
das Messelement (10) einen Schichtwiderstand mit einem keramischen Träger und einem Widerstandselement aufweist, wobei das Widerstandselement durch eine Dünnschicht aus Platin oder einer Platinlegierung gebildet ist.

11. Temperatursensor nach einem der vorhergehenden Ansprüche,
**dadurch gekennzeichnet, dass**
das Messelement (10), die Flachfeder (20) und der Zuleitungsdraht (13) in einem Sensorgehäuse (14) eingeschlossen sind, wobei das Messelement (10) in ein keramisches Füllmaterial (16) eingebettet ist, das eine Gehäusespitze (15) des Sensorgehäuses (14) ausfüllt, und sich die Flachfeder (20) durch einen Freiraum (25) des Sensorgehäuses (14) erstreckt.

12. Temperatursensor nach einem der vorhergehenden Ansprüche,
**dadurch gekennzeichnet, dass**
der Temperatursensor für die Messung von Abgastemperaturen eines Verbrennungsmotors geeignet ist, wobei die maximalen Abgastemperaturen mindestens 900°C, insbesondere mindestens 1000°C, insbesondere mindestens 1050°C, betragen.

13. Abgastemperaturüberwachungssystem mit einem Temperatursensor nach einem der vorhergehenden Ansprüche.

14. Verfahren zur Herstellung eines Temperatursensors oder eines Abgastemperaturüberwachungssystems nach einem der vorhergehenden Ansprüche, wobei das Verfahren die folgenden Schritte aufweist:
a. Vorpositionieren des Kontaktdrahts (11) und/oder des Zuleitungsdrahts (13) durch Anordnen der Flachfeder (20) in einer Ebene mit dem Kontaktdraht (11) und/oder dem Zuleitungsdraht (13), wobei sich der Kontaktdraht (11) und/oder der Zuleitungsdraht (13) in das gabelartige oder rinnenförmige Positionierelement (21, 22) erstreckt;
b. Verschweißen des Positionierelements (21, 22) mit dem Kontaktdraht (11) und/oder dem Zuleitungsdraht (13) durch eine Längsschweißnaht.

## Claims

1. Temperature sensor, in particular high temperature sensor, with a measuring element (10) that comprises contact wires (11), wherein at least one contact wire (11) is connected by means of an equalisation element (12) to a lead wire (13), wherein the equalisation element (12) is formed by a meander-shaped flat spring (20)
**characterised in that**
on at least one longitudinal end the flat spring (20) comprises a fork-shaped or groove-shaped positioning element (21, 22) for the interlocking pre-positioning of the flat spring (20) at the contact wire (11) and/or the lead wire (13).

2. Temperature sensor according to claim 1
**characterised in that**
the flat spring (20) is arranged in one plane with the contact wire (11) and/or the lead wire (13).

3. Temperature sensor according to claim 1 or 2
**characterised in that**
at each of both longitudinal ends the flat spring (20) comprises a positioning element (21, 22), wherein a distal positioning element (21) is connected to the contact wire (11) and a proximal positioning element (22) is connected to the lead wire (13).

4. Temperature sensor according to claim 3
**characterised in that**
the distal positioning element (21) surrounds a free end of the contact wire (11) and/or the proximal positioning element (22) surrounds a free end of the lead wire (13).

5. Temperature sensor according to claim 2 or 3
**characterised in that** the
flat spring (20) comprises a plurality of webs (23) of different lengths essentially arranged in parallel, which are connected to each other by means of loops (24), wherein the length of the webs (23) increases from the distal positioning element (21) in the direction of the proximal positioning element (22).

6. Temperature sensor according to any one of claims 3 to 5
**characterised in that**
the distal positioning element (21) is connected to the contact wire (11) and/or the proximal positioning element (22) is connected to the lead wire (13), in each case by means of at least one longitudinal welding seam.

7. Temperature sensor according to claim 6
**characterised in that** the
longitudinal welding seam runs in parallel to the contact wire (11) and/or the lead wire (13).

8. Temperature sensor according to any one of the preceding claims
**characterised in that**
the flat spring (20) as well as the contact wire (11) and/or the lead wire (13) comprise the same material.

9. Temperature sensor according to any one of the preceding claims
**characterised in that**
the flat spring (20) is cut in one piece out of a flat sheet of metal.

10. Temperature sensor according to any one of the preceding claims
**characterised in that**
the measuring element (10) comprises a multilayer resistor with a ceramic substrate and a resistance element, wherein the resistance element is formed by a thin layer of platinum or a platinum alloy.

11. Temperature sensor according to any one of the preceding elements
**characterised in that**
the measuring element (10), the flat spring (20) and the lead wire (13) are enclosed in a sensor housing (14), wherein the measuring element (10) is embedded in a ceramic filling material (16) which fills a housing peak (15) of the sensor housing (14) and the flat spring (20) extends through a free space (25) of the sensor housing (14).

12. Temperature sensor according to any one of the preceding claims
**characterised in that**
the temperature sensor is suitable for measuring waste gas temperatures of a combustion engine, wherein the maximum waste gas temperatures are at least 900 °C, in particular at least 1000 °C, in particular at least 1050 °C.

13. Waste gas temperature monitoring system with a temperature sensor according to any one of the preceding claims.

14. Method of producing a temperature sensor or a waste gas temperature monitoring system according to any one of the preceding claims wherein the method comprises the following steps:
a) prepositioning of the contact wire (11) and/or the lead wire (13) through arranging the flat spring (20) in a plane with the contact wire (11) and/or the lead wire (13), wherein the contact wire (11) and/or the lead wire (13) extend(s) into the fork-shaped or groove-shaped positioning element (21, 22);
b) welding of the positioning element (21, 22) to the contact wire (11) and/or the lead wire (13) by way of a longitudinal welding seam.

## Revendications

1. Capteur de température, en particulier capteur de température élevée, comportant un élément de mesure (10) qui présente des fils de contact (11), au moins un fil de contact (11) étant raccordé par un élément compensateur (12) à un fil de conduite d'amenée (13), l'élément compensateur (12) étant constitué par un ressort plat de forme de méandre (20),
**caractérisé en ce que**
le ressort plat (20) présente à au moins une extrémité longitudinale un élément de positionnement en forme de fourche ou de rigole (21,22) pour le pré-positionnement en correspondance géométrique du ressort plat (20) au niveau du fil de contact (11) et/ou de la conduite d'amenée (13).

2. Capteur de température selon la revendication 1,
**caractérisé en ce que**
le ressort plat (20) est disposé dans un plan avec le fil de contact (11) et/ou la conduite d'amenée (13).

3. Capteur de température selon la revendication 1 ou 2,
**caractérisé en ce que**
le ressort plat (20) présente aux deux extrémités longitudinales respectivement un élément de positionnement (21,22), un élément de positionnement distal (21) étant raccordé au fil de contact (11) et un élément de positionnement proximal (22) à la conduite d'amenée (13).

4. Capteur de température selon la revendication 3,
**caractérisé en ce que**
l'élément de positionnement distal (21) entoure une extrémité libre du fil de contact (11) et/ou l'élément de positionnement proximal (22) une extrémité libre de la conduite d'amenée (13).

5. Capteur de température selon la revendication 2 ou 3,
**caractérisé en ce que**
le ressort plat (20) présente plusieurs traverses (23) disposées substantiellement parallèlement de longueur différente qui sont connectées entre elles par des boucles (24), la longueur des traverses (23) augmentant depuis l'élément de positionnement distal (21) en direction de l'élément de positionnement proximal (22).

6. Capteur de température selon une des revendications 3 à 5,
**caractérisé en ce que**
l'élément de positionnement distal (21) est respectivement raccordé au fil de contact (11) et/ou l'élément de positionnement proximal (22) à la conduite d'amenée (13) par au moins un cordon de soudure longitudinal.

7. Capteur de température selon la revendication 6,
**caractérisé en ce que**
le cordon de soudure longitudinal s'étend parallèlement au fil de contact (11) et/ou à la conduite d'amenée (13).

8. Capteur de température selon une des revendications précédentes,
**caractérisé en ce que**
le ressort plat (20) et le fil de contact (11) et/ou la conduite d'amenée (13) présentent le même matériau.

9. Capteur de température selon une des revendications précédentes,
**caractérisé en ce que**
le ressort plat (20) est découpé d'une seule pièce dans une tôle plate.

10. Capteur de température selon une des revendications précédentes,
**caractérisé en ce que**
l'élément de mesure (10) présente une résistance de couche comportant un support céramique et un élément de résistance, l'élément de résistance étant constitué par une couche mince de platine ou un alliage de platine.

11. Capteur de température selon une des revendications précédentes,
**caractérisé en ce que**
l'élément de mesure (10), le ressort plat (20) et la conduite d'amenée (13) sont renfermés dans un boîtier de capteur (14), l'élément de mesure (10) étant encastré dans un matériau de comblement céramique (16) qui remplit une pointe de boîtier (15) du boîtier de capteur (14), et que le ressort plat (20) s'étend à travers un espace libre (25) du boîtier de capteur (14).

12. Capteur de température selon une des revendications précédentes,
**caractérisé en ce que**
le capteur de température est adapté pour la mesure des températures de gaz d'échappement d'un moteur à combustion, les températures maximales du gaz d'échappement s'élevant à au moins 900 °C, en particulier au moins 1000 °C, en particulier au moins 1050 °C.

13. Système de surveillance de la température des gaz d'échappement comportant un capteur de température selon une des revendications précédentes.

14. Procédé de fabrication d'un capteur de température ou d'un système de surveillance de la température des gaz d'échappement selon une des revendications précédentes, ce procédé présentant les étapes suivantes :
a. pré-positionnement du fil de contact (11) et/ou de la conduite d'amenée (13) par disposition du ressort plat (20) dans un plan avec le fil de contact (11) et/ou la conduite d'amenée (13), le fil de contact (11) et/ou la conduite d'amenée (13) s'étendant dans l'élément de positionnement en forme de fourche ou en forme de rigole (21,22)
b. soudage de l'élément de positionnement (21,22) avec le fil de contact (11) et/ou la conduite d'amenée (13) par un cordon de soudure longitudinal.
